# EUROPEAN PATENT APPLICATION

(11) **EP 4 756 955 A1**
(43) Date of publication of application: **10.06.2026**
(21) Application number: 25857926.7
(22) Date of filing: 06.08.2025
(51) Int. Cl.: H01M 10/04, B23K 37/00, B08B 5/02, B08B 1/12, B08B 1/34

(54) **ELECTRODE ASSEMBLY PROCESSING DEVICE CAPABLE OF EASILY REMOVING FOREIGN SUBSTANCES, AND ELECTRODE ASSEMBLY PROCESSING METHOD USING SAME**

(30) Priority: 26.08.2024 KR 20240114464
(71) Applicant: LG Energy Solution, Ltd., Seoul 07335 (KR)
(72) Inventor: OH, Jung Su, Daejeon 34122 (KR); BAEK, Jeong Gyu, Daejeon 34122 (KR)
(74) Representative: Plasseraud IP
(86) International application number: PCT/KR2025/011759
(87) International publication number: WO 2026/049341

(57) **Abstract**

Disclosed are an electrode assembly machining apparatus facilitating foreign matter removal and an electrode assembly machining method using the same, and more particularly an electrode assembly machining apparatus including a seating jig configured to allow an electrode assembly having an electrode lead connected thereto to be seated thereon, a bead machining unit located above a bead portion formed on the electrode lead, the bead machining unit configured to machine the bead portion, a pressing support unit located under the bead portion, and air spray units located respectively above and under the electrode assembly, the air spray units configured to spray air toward the bead machining unit, and an electrode assembly machining method using the same.

## Description

### [Technical Field]

This application claims the benefit of priority to Korean Patent Application No. 2024-0114464 filed on August 26, 2024, the disclosure of which is incorporated herein by reference in its entirety.

The present invention relates to an electrode assembly machining apparatus facilitating foreign matter removal and an electrode assembly machining method using the same, and more particularly to an electrode assembly machining apparatus facilitating foreign matter removal capable of removing foreign matter near a bead portion formed by welding an electrode tab and an electrode lead to each other, thereby improving quality, and an electrode assembly machining method using the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, in a battery cell manufacturing process, electrode tabs protruding from electrodes of an electrode assembly formed by stacking the electrodes and separators are gathered to form an electrode tab bundle, and an electrode lead is welded to the electrode tab bundle.

A bead portion with a certain volume is formed at the position at which the electrode tab bundle and the electrode lead are welded to each other, and pressure is applied to the bead portion. At this time, foreign matter may be present on the bead portion, and the foreign matter may adhere to the electrode assembly, etc., due to pressing of the bead portion, causing battery cell defects and quality degradation.

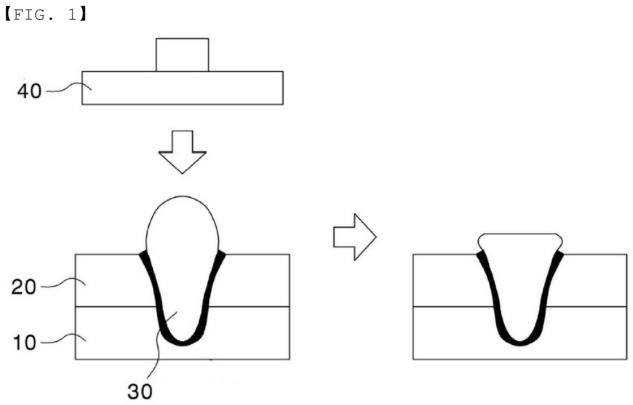

FIG. 1 is a schematic view illustrating a conventional method of reducing the height of a weld bead protruding from a welded joint between an electrode tab and an electrode lead.

As shown in FIG. 1, in the conventional method of reducing the height of the weld bead, the weld bead 30 formed by welding the electrode tab 10 and the electrode lead 20 to each other is pressed using a press 40 to reduce the height of the weld bead.

The conventional method of reducing the height of the weld bead has the problem that foreign matter generated during welding of the electrode tab 10 and the electrode lead 20 and foreign matter generated on the weld bead 30 due to pressing by the press 40 may be introduced in a direction toward an electrode assembly or a battery cell may be manufactured in the presence of the foreign matter, which may cause defects and quality degradation.

### (Prior Art Document)

(Patent Document 1) Korean Patent Application Publication No. 2022-0037051

### [Disclosure]

### [Technical Problem]

The present invention has been made in view of the above problems, and it is an object of the present invention to provide an electrode assembly machining apparatus facilitating foreign matter removal capable of pressing a bead portion in the state in which foreign matter that may be generated before pressing and after pressing is removed and an electrode assembly machining method using the same.

### [Technical Solution]

An electrode assembly machining apparatus according to the present invention to accomplish the above object includes a seating jig (100) configured to allow an electrode assembly (C) having an electrode lead (L) connected thereto to be seated thereon, a bead machining unit (200) located above a bead portion (B) formed on the electrode lead (L), the bead machining unit configured to machine the bead portion (B), a pressing support unit (300) located under the bead portion (B), and air spray units (400) located respectively above and under the electrode assembly (C), the air spray units configured to spray air toward the bead machining unit (200).

Also, in the electrode assembly machining apparatus according to the present invention, the bead machining unit (200) may include a foreign matter removal portion (210) formed so as to extend a certain length, the foreign matter removal portion configured to remove foreign matter from the vicinity of the bead portion (B), a bead pressing portion (220) connected to the foreign matter removal portion (210), the bead pressing port formed so as to extend in a vertical direction, the bead pressing port configured to press the bead portion (B), and a motor portion (230) configured to rotate the foreign matter removal portion (210) and the bead pressing portion (220) in order to change positions thereof.

Also, in the electrode assembly machining apparatus according to the present invention, the foreign matter removal portion (210) may be a rotatable roller brush including a plurality of bristles.

Also, in the electrode assembly machining apparatus according to the present invention, the foreign matter removal portion (210) may be an air spray device configured to spray air.

Also, the electrode assembly machining apparatus according to the present invention may include an air suction unit (500) located spaced apart from the bead machining unit (200), the air suction unit configured to suction air.

Also, in the electrode assembly machining apparatus according to the present invention, the electrode assembly (C) may be seated on the seating jig (100) such that a part of one side thereof protrudes.

Also, in the electrode assembly machining apparatus according to the present invention, the air spray unit (400) may include an upper air spray portion (410) located above one side of the electrode assembly (C) and a lower air spray portion (420) located under the one side of the electrode assembly (C), the upper air spray portion (410) may include a first air flow path (411) along which air is configured to flow, and the lower air spray portion (420) may include a second air flow path (421) along which air is configured to flow.

Also, in the electrode assembly machining apparatus according to the present invention, each of the first air flow path (411) and the second air flow path (421) may have a slit-shaped outlet configured to allow air to be sprayed therefrom.

Also, in the electrode assembly machining apparatus according to the present invention, each of the first air flow path (411) and the second air flow path (421) may be bent at a certain angle in a direction in which air is sprayed such that air is sprayed toward the bead portion (B).

Also, in the electrode assembly machining apparatus according to the present invention, the air suction unit (500) may have an air suction path (510) configured to allow air to be suctioned therethrough, and the air suction path (510) may be bent at a certain angle such that an inlet configured to allow air to be suctioned therethrough faces the bead portion (B).

Also, in the electrode assembly machining apparatus according to the present invention, a part of a lower side of the air suction path (510) may be formed in a shape having a width gradually decreasing from the inlet in an inward direction.

In addition, electrode assembly machining method using the electrode assembly machining apparatus according to the present invention includes a first step of seating an electrode assembly having an electrode lead connected thereto on the seating jig, a second step of spraying air toward a bead portion through the air spray unit, a third step of removing foreign matter from the bead portion and pressing the bead portion through the bead machining unit, and a fourth step of transferring the machined electrode assembly.

### [Advantageous Effects]

As is apparent from the above description, an electrode assembly machining apparatus facilitating foreign matter removal according to the present invention and an electrode assembly machining method using the same have the advantage that a bead machining unit including a foreign matter removal portion capable of removing foreign matter from a bead portion is provided, whereby it is possible to easily remove the foreign matter from the bead portion.

In addition, the electrode assembly machining apparatus facilitating foreign matter removal according to the present invention and the electrode assembly machining method using the same have the advantage that an air spray unit sprays air in a direction toward the bead portion, whereby it is possible to prevent foreign matter from flowing in a direction toward an electrode assembly and adhering to the electrode assembly.

Furthermore, the electrode assembly machining apparatus facilitating foreign matter removal according to the present invention and the electrode assembly machining method using the same have the advantage that an air suction unit configured to suction air is provided, whereby it is possible to more easily remove foreign matter from the bead portion.

### [Description of Drawings]

FIG. 1 is a schematic view illustrating a conventional method of reducing the height of a weld bead protruding from a welded joint between an electrode tab and an electrode lead.
FIG. 2 is a perspective view showing an electrode assembly machining apparatus according to a first preferred embodiment of the present invention.
FIG. 3 is a sectional view showing the electrode assembly machining apparatus according to the first preferred embodiment of the present invention.
FIG. 4 is a perspective view showing an electrode assembly machining apparatus according to a second preferred embodiment of the present invention.
FIG. 5 is a sectional view showing the electrode assembly machining apparatus according to the second preferred embodiment of the present invention.
FIG. 6 is a perspective view showing an electrode assembly machining apparatus according to a third preferred embodiment of the present invention.
FIG. 7 is a sectional view showing the electrode assembly machining apparatus according to the third preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrode assembly machining apparatus facilitating foreign matter removal according to the present invention and an electrode assembly machining method using the same will be described with reference to the accompanying drawings.

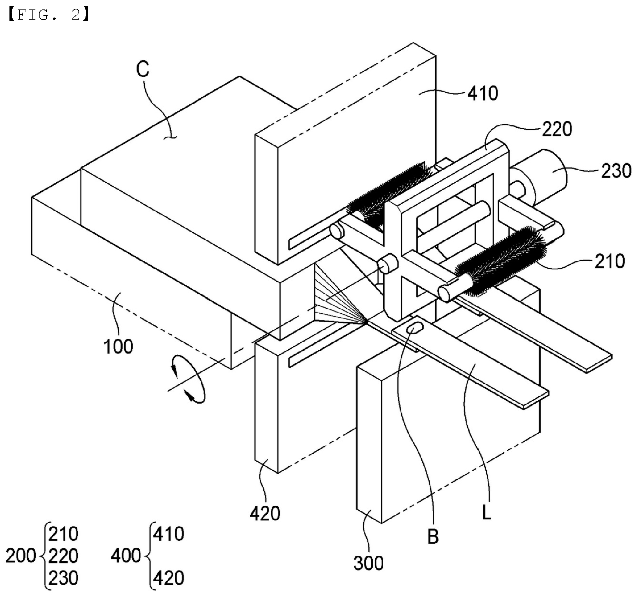

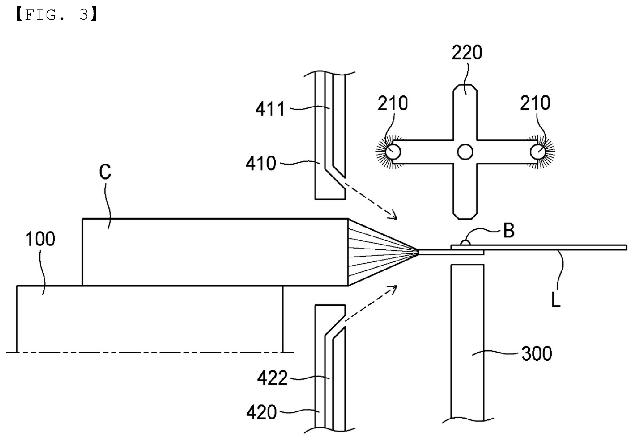

FIG. 2 is a perspective view showing an electrode assembly machining apparatus according to a first preferred embodiment of the present invention, and FIG. 3 is a sectional view showing the electrode assembly machining apparatus according to the first preferred embodiment of the present invention.

Referring to FIGs. 2 and 3, the electrode assembly machining apparatus according to the first preferred embodiment of the present invention includes a seating jig 100, a bead machining unit 200, a pressing support unit 300, and an air spray unit 400.

The seating jig 100 may be a workbench with a flat upper surface, on which an electrode assembly C having a bead portion B to be machined is seated, and is not particularly restricted as long as the electrode assembly C can be seated on the seating jig such that the bead portion B can be pressed.

In this case, the electrode assembly C may be seated on the upper surface of the seating jig 100 such that a part of one side thereof protrudes therefrom, which serves to allow a lower air spray portion 420 of the air spray unit 400, a description of which will follow, to be located under the part of one side of the electrode assembly C.

Here, the electrode assembly C may have a structure in which positive electrodes and negative electrodes are alternately stacked a plurality of times in the state in which separators are interposed respectively therebetween, and may have a shape in which electrode tabs constituted by positive electrode tabs and negative electrode tabs protrude.

The positive electrode is manufactured by applying a positive electrode mixture including a positive electrode active material to a positive electrode current collector and drying the same, and the positive electrode mixture may optionally further include a binder, a conductive agent, or a filler, as needed.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

The negative electrode is manufactured by applying a negative electrode mixture including a negative electrode active material to a negative electrode current collector and drying the same, and the negative electrode mixture may further include a component, such as a conductive agent, a binder, or a filler, as needed.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. Furthermore, in the same manner as the positive electrode current collector, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

The separator prevents short circuit between the negative electrode and the positive electrode and allows only migration of lithium ions, and an insulating thin film having high ion permeability and mechanical strength is used as the separator. The pore diameter of the separator is typically 0.01 to 10 µm, and the thickness of the separator is typically 5 to 300 µm. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, each of the negative electrode current collector and the positive electrode current collector includes a part to which a slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form a tab bundle.

An electrode lead L may be welded to the tab bundle such that the electrode assembly C can be connected to the outside, and a bead portion B is formed at the part at which the tab bundle and the electrode lead L are welded.

The bead machining unit 200 is configured to machine the bead portion B formed by welding the tap bundle and the electrode lead L to each other, and includes a foreign matter removal portion 210, a bead pressing portion 220, and a motor portion 230.

The foreign matter removal portion 210, which is configured to remove foreign matter present on the bead portion B, extends a certain length, and a roller brush that is rotatable and has a plurality of bristles formed thereon is provided at a part of the foreign matter removal portion adjacent to the bead portion B.

The roller brush of the foreign matter removal portion 210 is rotated in a direction in which foreign matter is removed in a direction opposite a direction in which the electrode assembly C is seated in order to prevent the foreign matter from being introduced in a direction toward the electrode assembly C during removal of the foreign matter.

That is, based on FIG. 3, the roller brush of the foreign matter removal portion 210 is rotated counterclockwise to remove foreign matter from the bead portion B.

The bead pressing portion 220, which is configured to apply pressure to the bead portion B in order to press the bead portion, is connected to the foreign matter removal portion 210 and extends a certain length.

In addition, the bead pressing portion 220 may be connected and extended in a direction perpendicular to the foreign matter removal portion 210.

A part of the bead pressing portion 220 facing the bead portion B may be flat, whereby it is possible to more accurately press the bead portion B.

The motor portion 230 is configured to rotate the foreign matter removal portion 210 and the bead pressing portion 220, which are perpendicular to each other, in order to change the positions thereof.

More specifically, after removing foreign matter from the bead portion B in the state in which the foreign matter removal portion 210 is located above the bead portion B, the motor portion 230 rotates the foreign matter removal portion 210 and the bead pressing portion 220, which are integrally formed, by 90° such that the bead pressing portion 220 is located above the bead portion B.

Here, the bead machining unit 200 may move in a vertical direction to adjust the distance from the bead portion B, and may also move in a horizontal direction for alignment with the bead portion B in the vertical direction as needed.

The pressing support unit 300 is configured to support the bead portion B from below when the bead portion is pressed by the bead pressing portion 220 of the bead machining unit 200, and an upper surface thereof may be flat.

In addition, the pressing support unit 300 may move so as to be located under the bead portion in order to support the accurately pressed part, and accordingly, the pressing support unit may move in upward, downward, leftward, rightward, forward, and rearward directions.

The air spray unit 400 is configured to spray air toward the bead portion B to remove foreign matter from the bead portion B and to prevent foreign matter from scattering in the direction toward the electrode assembly C, and includes an upper air spray portion 410 and a lower air spray portion 420.

The upper air spray portion 410 is located above one side of the electrode assembly C and is provided therein with a first air flow path 411 along which air sprayed toward the bead portion B flows.

The first air flow path 411 may have a slit-shaped outlet, from which air is sprayed, and the direction in which air is sprayed may be bent at a certain angle such that the sprayed air is guided to the bead portion B.

Accordingly, the first air flow path 411 may have a structure in which a part thereof is bent at a certain angle in order to guide air in a direction toward the bead portion B.

Meanwhile, the lower air spray portion 420 is located under one side of the electrode assembly C and is provided therein with a second air flow path 421 along which air sprayed toward the bead portion B flows.

The second air flow path 421 may have a slit-shaped outlet, from which air is sprayed, and the direction in which air is sprayed may be bent at a certain angle such that the sprayed air is guided to the bead portion B.

Accordingly, the second air flow path 421 may have a structure in which a part thereof is bent at a certain angle in order to guide air in the direction toward the bead portion B.

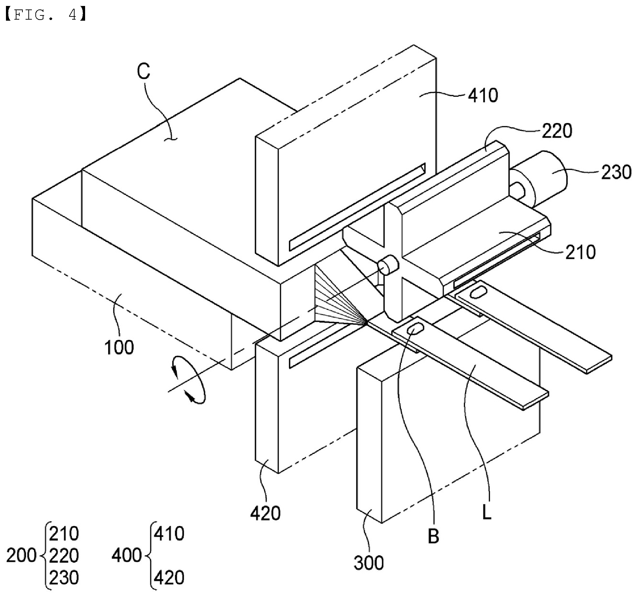

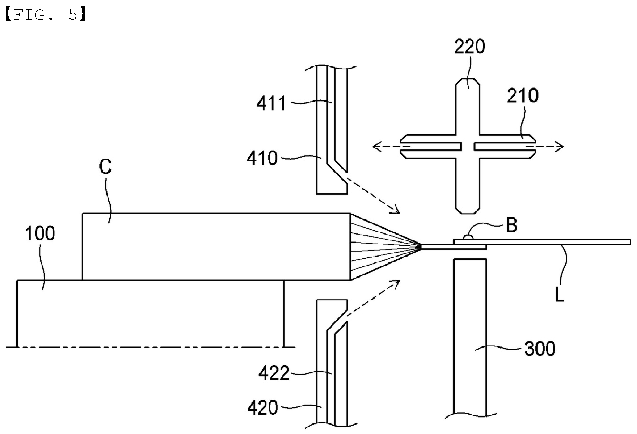

FIG. 4 is a perspective view showing an electrode assembly machining apparatus according to a second preferred embodiment of the present invention, and FIG. 5 is a sectional view showing the electrode assembly machining apparatus according to the second preferred embodiment of the present invention.

Referring to FIGs. 4 and 5, the electrode assembly machining apparatus according to the second embodiment of the present invention is identical to the electrode assembly machining apparatus according to the first embodiment described with reference to FIGs. 2 and 3, except for the foreign matter removal portion 210 of the bead machining unit 200, and therefore a description of identical configurations will be omitted.

In the electrode assembly machining apparatus according to the second embodiment, the foreign matter removal portion 210 of the bead machining unit 200 is an air spray device capable of spraying air, wherein the foreign matter removal portion extends a certain length and is provided therein with an air flow path along which air can flow.

That is, the foreign matter removal portion 210 according to the second embodiment is configured to remove foreign matter by spraying air, whereby it is possible to remove foreign matter without contact with the bead portion B.

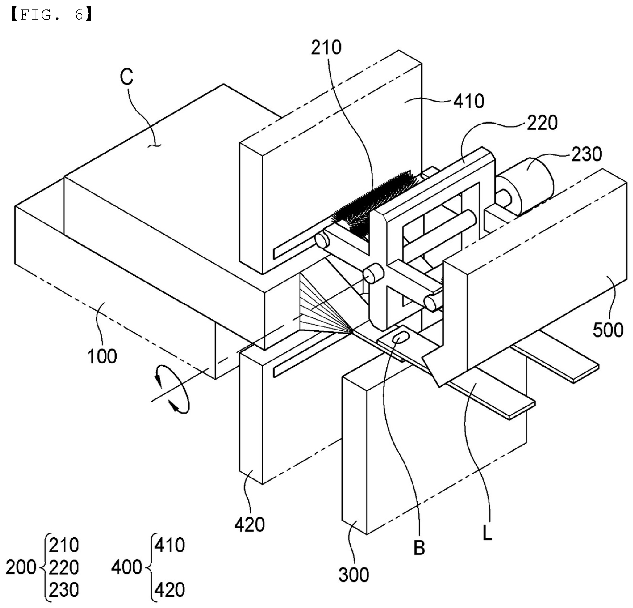

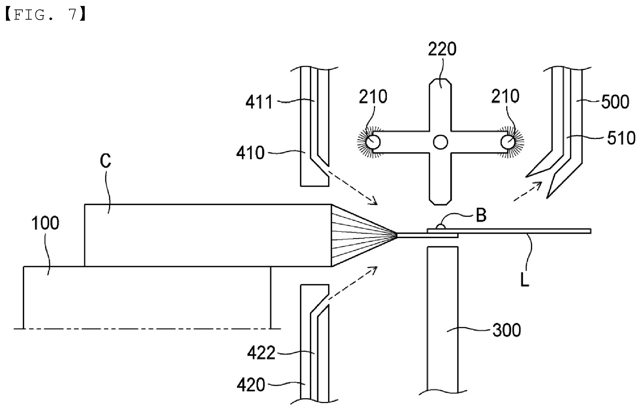

FIG. 6 is a perspective view showing an electrode assembly machining apparatus according to a third preferred embodiment of the present invention, and FIG. 7 is a sectional view showing the electrode assembly machining apparatus according to the third preferred embodiment of the present invention.

Referring to FIGs. 6 and 7, the electrode assembly machining apparatus according to the third embodiment of the present invention is identical to the electrode assembly machining apparatus according to the first embodiment described with reference to FIGs. 2 and 3, except that an air suction unit 500 is further provided, and therefore a description of identical configurations will be omitted.

In the electrode assembly machining apparatus according to the third embodiment, an air suction unit 500 is provided at a position spaced apart from the bead machining unit 200.

The air suction unit 500 is configured to remove foreign matter scattered near the bead portion B by the foreign matter removal portion 210 and the air spray unit 400 by suctioning, and is provided therein with an air suction path 510.

In addition, the air suction unit 500 is formed such that an inlet configured to allow air to be suctioned therethrough is bent at a certain angle so as to face the bead portion B.

Accordingly, a part of a lower side of the air suction path 510 is bent at a certain angle so as to face the bead portion B.

In addition, a part of the lower side of the air suction path 510 is formed in a shape having a width gradually decreasing from the inlet in an inward direction, whereby it is possible to more easily remove foreign matter by suctioning.

The air suction unit 500 removes foreign matter from the bead portion B and the vicinity of the bead portion B, and therefore it is possible to prevent foreign matter from settling on the workbench, etc. again.

An electrode assembly machining method using the electrode assembly machining apparatus according to the present invention includes a first step of seating an electrode assembly having an electrode lead connected thereto on the seating jig, a second step of spraying air toward a bead portion through the air spray unit, a third step of removing foreign matter from the bead portion and pressing the bead portion through the bead machining unit, and a fourth step of transferring the machined electrode assembly.

First, the first step of seating the electrode assembly, to which the electrode lead is connected, on the seating jig is a step of seating the electrode assembly having the electrode lead connected thereto on the seating jig such that a part thereof protrudes.

Here, the air spray units are located respectively above and under the part of the electrode assembly protruding from the seating jig.

The second step of spraying air toward the bead portion through the air spray unit is a step of spraying air toward the bead portion through the upper air spray portion and the lower air spray unit located respectively above and under one side of the electrode assembly.

At this time, foreign matter may be removed from the bead portion and the vicinity of the bead portion by the air spray unit, and it is possible to prevent the foreign matter from scattering in a direction toward the electrode assembly.

The third step of removing foreign matter from the bead portion and pressing the bead portion through the bead machining unit is a step of removing foreign matter from the bead portion and the vicinity of the bead portion through the foreign matter removal portion of the bead machining unit and pressing the bead portion through the bead pressing portion of the bead machining unit.

At this time, foreign matter is removed by the foreign matter removal portion, and the foreign matter removal portion and the bead pressing portion are rotated 90° by the motor portion such that the bead pressing portion is located above the bead portion and presses the bead portion.

In addition, any foreign matter that may be generated while pressing the bead portion is blown away in a direction opposite a direction in which the electrode assembly is located and removed by the air spray unit operated in the second step.

The fourth step of transferring the machined electrode assembly is a step of transferring the electrode assembly having the bead portion machined by the bead machining unit to the next step for manufacturing a battery cell, such as a step of receiving the electrode assembly in a cell case.

At this time, the electrode assembly may be transferred by a robotic arm, a gripping unit, or a conveyor belt, and a method of transferring the electrode assembly and is not particularly restricted as long as it is possible to transfer the electrode assembly to the next step for manufacturing the battery cell.

Those skilled in the art to which the present invention pertains will appreciate that various applications and modifications are possible within the category of the present invention based on the above description.

### (Description of Reference Symbols)

- 100:: Seating jig
- 200:: Bead machining unit
- 210:: Foreign matter removal portion
- 220:: Bead pressing portion
- 230:: Motor portion
- 300:: Pressing support unit
- 400:: Air spray unit
- 410:: Upper air spray portion
- 411:: First air flow path
- 420:: Lower air spray portion
- 421:: Second air flow path
- 500:: Air suction unit
- 510:: Air suction path
- L:: Electrode lead
- C:: Electrode assembly
- B:: Bead portion

## Claims

1. An electrode assembly machining apparatus comprising:
a seating jig configured to allow an electrode assembly having an electrode lead connected thereto to be seated thereon;
a bead machining unit located above a bead portion formed on the electrode lead, the bead machining unit configured to machine the bead portion;
a pressing support unit located under the bead portion; and
air spray units located respectively above and under the electrode assembly, the air spray units configured to spray air toward the bead machining unit.

2. The electrode assembly machining apparatus according to claim 1, wherein the bead machining unit comprises:
a foreign matter removal portion formed so as to extend a certain length, the foreign matter removal portion configured to remove foreign matter from a vicinity of the bead portion;
a bead pressing portion connected to the foreign matter removal portion, the bead pressing portion formed so as to extend in a vertical direction, the bead pressing portion configured to press the bead portion; and
a motor portion configured to rotate the foreign matter removal portion and the bead pressing portion in order to change positions thereof.

3. The electrode assembly machining apparatus according to claim 2, wherein the foreign matter removal portion is a rotatable roller brush comprising a plurality of bristles.

4. The electrode assembly machining apparatus according to claim 2, wherein the foreign matter removal portion is an air spray device configured to spray air.

5. The electrode assembly machining apparatus according to claim 2, comprising an air suction unit located spaced apart from the bead machining unit, the air suction unit configured to suction air.

6. The electrode assembly machining apparatus according to claim 2, wherein the electrode assembly is seated on the seating jig such that a part of one side thereof protrudes.

7. The electrode assembly machining apparatus according to claim 2, wherein
the air spray unit comprises an upper air spray portion located above one side of the electrode assembly and a lower air spray portion located under the one side of the electrode assembly,
the upper air spray portion comprises a first air flow path along which air is configured to flow, and
the lower air spray portion comprises a second air flow path along which air is configured to flow.

8. The electrode assembly machining apparatus according to claim 7, wherein each of the first air flow path and the second air flow path has a slit-shaped outlet configured to allow air to be sprayed therefrom.

9. The electrode assembly machining apparatus according to claim 7, wherein each of the first air flow path and the second air flow path is bent at a certain angle in a direction in which air is sprayed such that air is sprayed toward the bead portion.

10. The electrode assembly machining apparatus according to claim 5, wherein
the air suction unit has an air suction path configured to allow air to be suctioned therethrough, and
the air suction path is bent at a certain angle such that an inlet configured to allow air to be suctioned therethrough faces the bead portion.

11. The electrode assembly machining apparatus according to claim 10, wherein a part of a lower side of the air suction path is formed in a shape having a width gradually decreasing from the inlet in an inward direction.

12. An electrode assembly machining method using the electrode assembly machining apparatus according to any one of claims 1 to 11, the electrode assembly machining method comprising:
a first step of seating an electrode assembly having an electrode lead connected thereto on the seating jig;
a second step of spraying air toward a bead portion through the air spray unit;
a third step of removing foreign matter from the bead portion and pressing the bead portion through the bead machining unit; and
a fourth step of transferring the machined electrode assembly.
